# EUROPEAN PATENT SPECIFICATION

(11) **EP 1 496 148 B1**
(45) Date of publication and mention of the grant of the patent: **13.09.2006**
(21) Application number: 04014673.0
(22) Date of filing: 23.06.2004
(51) Int. Cl.: D06N 7/00, D06N 3/00, B41M 3/18, B44C 1/20

(54) **Wallpaper for automobile and manufacturing method**
Tapete sowie Verfahren zu deren Herstellung
Revêtement mural et procédé de préparation

(30) Priority: 10.07.2003 KR 2003046737
(43) Date of publication of application: 12.01.2005
(73) Proprietor: Carl Freudenberg KG, 69469 Weinheim (DE)
(72) Inventor: Ryu, SungYong, Ansung-si, Kyunggi-do (KR); Jin, YongWon, Pyungtaek-si, Kyunggi-do (KR)

(56) References cited:
- EP-A- 0 563 977
- EP-A- 1 254 984
- DE-A- 10 052 295
- US-A- 4 320 163
- US-A- 5 360 826
- US-A1- 2003 096 058
- DATABASE WPI Section Ch, Week 199726 Derwent Publications Ltd., London, GB; Class A12, AN 1997-285246 XP002182428 & JP 09 104798 A (SAIDEN KAGAKU KK) 22 April 1997 (1997-04-22)

## Description

This invention pertains to a non-woven fabric automobile wallpaper, as well as to its manufacturing method. Specifically, it pertains to an automobile wallpaper in which, if heat is applied to the surface of such automobile wallpaper, its volume increases by 30 times; in which an appropriate amount of special foaming agent, made from polymer with a strong exterior layer, is mixed within the printing liquid so as to perform printing; in which a foam is formed during the drying process; and in which a three-dimensional effect is achieved with various shapes and colors on the flat surface, rendering to it a luxurious, special exterior appearance with improved properties relative to wear resistance, sound absorption, and low cost, as well as to its excellent external appearance and physical properties.

Exterior surface finishing agents for the headliner, door trim and seat are normally used effectively. Material used for automobile wallpaper can be made from cloth, non-woven fabric, or PVC (polyvinyl chloride), and various processes are carried out with these materials so as to achieve various external appearances and colors. For example, by dying and performing print processing on cloth and non-woven fabric, various patterns and colors can be applied so as to achieve a luxurious feel. In the case of PVC, various surfaces and luxurious effects are achievable by means of embossed processing.

US-A-4 320 163 describes a three-dimensional printed seiling or wall board facing in which a greige, foam-coated fabric is selectively printed with an expandable print paste containing microspheres which encapsulate a liquid phase.

US 2003/096058 A1 discloses a process of manufacturing a designed fiberglas wall covering comprising impregnating a fiberglass fabric by applying a chemical dispersion to the glass fabric, subsequently forming a first image coating for painted effects and subsequently forming a second image coating created plastic volumetric images by expandable microspheres encapsulating agents which are gasified upon heating.

EP-A-1 254 984 discloses a glass fibre wall covering made by sequential application of aqueous dispersion and an image coating to selectivly create an image for painted effects and a second image coating created plastic volumetric images, too.

JP 09 104798 A (abstract) discloses a manufacture of an automobile wallpaper and a printing liquid comprising thermoplastic microspheres printed on the surface.

US-A-5 360 826 describes an expandable aqueous coating composition for making wallcoverings having a 3-dimensionally patterned surface. The coating composition comprises expandable particles which include a fluid agent.

EP-A-0 563 977 describes a structured paste and a method for the manufacture of three-dimensional surface structured coverings for wall or floor coverings. The structured paste comprises a PVC-free and softener-free polymerdispersion, a starch and possibly microspheres which expand to 20 times of the original size.

DE 100 52 295 A describes a structured paste and a method for the manufacture of three-dimensional surface structured coverings. The structured paste comprises a polymerdispersion and microspheres which are filled with volatile organic liquid.

However, foam printing processes are not possible for use with materials used as automobile wallpaper. The reason for this is that automobile wallpaper is mostly manufactured in mass quantities, at the same size and shape, through the use of molds. Because most mold processing is performed at high temperatures and pressures, printing patterns which possess a three-dimensional effect that are formed by means of foam printing become crushed, and the original three-dimensional effect is lost.

As this invention was originated in order to solve the current problems described above, its objective is to provide an automobile wallpaper, and a manufacturing method for such, in which various patterns and colors are applied with a three-dimensional effect to the flat surface of the material being used for the automobile wallpaper, so as to render to the surface a luxurious, special, external appearance; in which printing with a three-dimensional effect is performed to the surface of existing automobile wallpaper;, in which properties relative to wear resistance and sound absorption are improved; in which printing with a three-dimensional effect is performed to cover defects of the surface of existing automobile wallpaper so that such defects don't show; and in which costs are reduced and in which excellent properties relative to the external appearance and physical nature of the invention are maintained.

In order to achieve the aforementioned objectives, this invention adds a special foaming agent, through a certain foaming and drying process carried out during automobile wallpaper manufacturing in which the wallpaper used consists of cloth or plastic sheeting with a weight of 30-300g/m². A three-dimensional effect is expressed in various patterns and colors on the surface during a process in which the volume increases 30 times when heat is applied, and in which an appropriate amount of foaming agent, made from polymer with a strong exterior layer, is mixed within the printing liquid. Such printing is subsequently conducted on the surface, and is then dried.

In order to achieve the aforementioned objectives in the manufacturing method of this invention, by expressing and forming the various colors and three-dimensional effect through conducting printing and drying processes to the surface of the automobile wallpaper, a thermoplastic polymer with a strong exterior layer is formed where the printing process prints onto the surface of the automobile wallpaper with a printing liquid, to which is added a special foaming agent, the volume of which increases by 30 times when heat is applied. A drying process is then conducted, wherein the surface of the automobile wallpaper printed according to the aforementioned printing process is dried, and in which the printing liquid is caused to foam at the same time that the three-dimensional effect is applied.

The invention includes the following additional characteristics: the aforementioned foaming agent is a thermoplastic polymer which changes from a previous size of 5-50µm to possessing an exterior layer thickness of 2-15µm. A hydrocarbon gas is inserted into the exterior layer, so that its volume expands by 30 times due to the expansion of hydrocarbon gas within the foaming agent, previously added to the printing liquid, during the process of foaming through heating which occurs during the drying process. The printing layer of the automobile wallpaper, in which a three-dimensional effect has been produced during the high-temperature / -pressure molding process which constitutes the automobile wallpaper manufacturing process, does not become crushed, and maintains its original form.

Another characteristic of this invention is that the aforementioned printing liquid is composed of resin, foaming agent, paint, dye, and other additives; the types of emulsion resins used for printing are one or more of the following kinds: acryl, styrene, polyvinylchloride, polyvinylalcohol, polyester, ethylenevinylchloride, ethylenevinyl acetate or polyurethane.

Another characteristic of this invention is that, when conducting the aforementioned printing process, 1-10 print heads are in use, and such printing and drying processes are carried out continuously.

This invention is explained in detail below with reference to the diagrams attached.

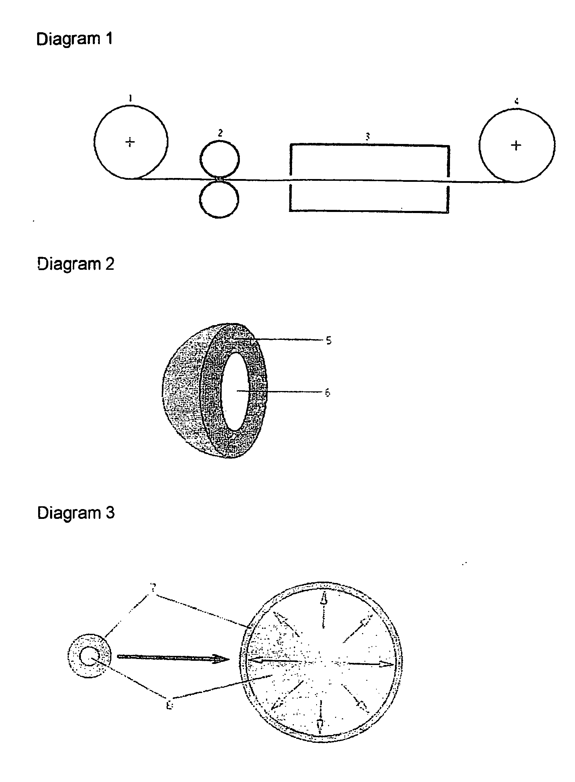

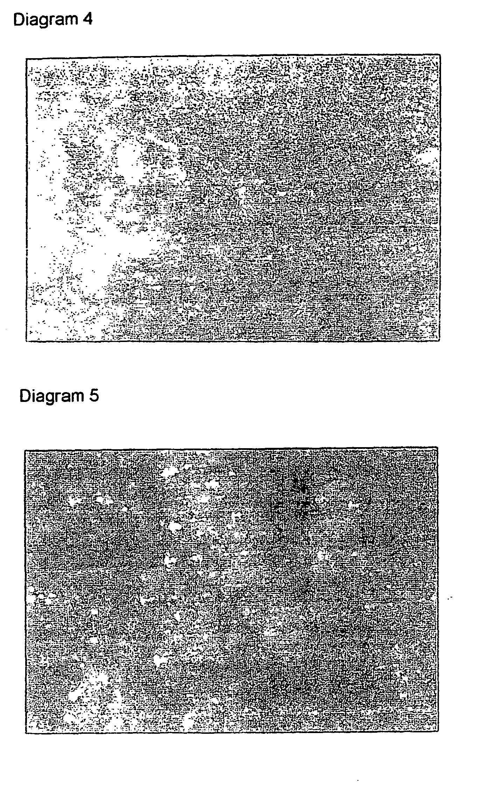

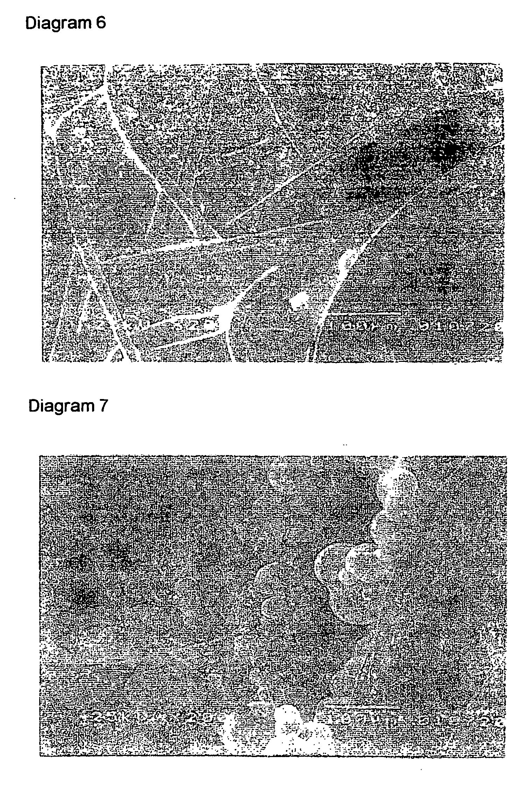

Diagram 1 is an outline diagram illustrating the foam printing manufacturing process of this invention, Diagram 2 is a cross-section diagram illustrating the foaming agent of this invention, and Diagram 3 is a principle diagram illustrating the condition of the foam of the foaming agent of this invention.

As shown in Diagrams 1 through 3, the automobile wallpaper of this invention and its manufacturing method pertain to a foamed automobile wallpaper (4) in which printing is achieved by means of print heads (2) on the surface of automobile wallpaper (1) with a printing liquid, in which a special foaming agent has been added which internally contains a hydrocarbon foaming agent gas so that the thermoplastic polymer with a strong exterior layer increases in volume by 30 times when heat is applied, and in which the surface of automobile wallpaper (1) that has been printed according to the aforementioned printing process is dried with a dryer (3), and a three-dimensional effect is achieved at the same time that the printing liquid is foamed.

Herein, automobile wallpaper (4), in which the aforementioned foaming has been completed, may be manufactured by mixing an appropriate amount of a special foaming agent, composed of a polymer with a strong exterior layer, and whose volume increases by 30 times when heat is applied, into the printing liquid, by then printing this onto the surface of automobile wallpaper (1), and by subsequently creating foam during the drying process, thereby achieving a three-dimensional effect to the surface of wallpaper (1). Wallpaper (4), to which the three-dimensional effects have been achieved, maintains its three-dimensional form based on the special foaming agent; because there aren't any changes to the exterior appearance even under high-temperature/-pressure molding conditions. Therefore, the desired automobile wallpaper (4) can be achieved.

The weight of wallpaper (4) in which the aforementioned three-dimensional effect is expressed, is 30-300g/m²; it can be composed of cloth or plastic sheet.

The foaming agent used in this invention has a previous size of 5-50µm, as seen in Diagram 2, and the exterior layer (5) is composed of a 2-15µm thermoplastic polymer, so that hydrocarbon gas (6) may be inserted inside the exterior layer. Therefore, if heat is applied, gas (8) within the foaming agent expands, as observed in Diagram 3, and thermoplastic exterior layer (7), increases so that the volume expands to 30 times the original size.

Therefore, if a printing liquid in which this kind of foaming agent is mixed is used, and if printing and drying processes are then carried out to the surface of wallpaper (1), then the foaming agent which is on the inside of the printed printing liquid expands due to the heat of the drying process, and its volume increases, so that printing can be achieved with a three-dimensional effect to the surface of the wallpaper.

The printing liquid herein is composed of resin, paint, dye, foaming agent, and other additives, and the types of emulsion resins used for printing are one or more of the following types: acryl, styrene, polyvinylchloride, polyvinylalcohol, polyester, ethylenevinylchloride, ethylenevinyl acetate or polyurethane.

There are 1-10 print heads in operation when performing the aforementioned printing processing, and it is desirable to conduct printing and drying processes continuously.

Also, in the printing method of the aforementioned print head, when printing it is desirable to use any one of or a combination of more than one of the following: rotating (rotary) screen method, flat screen method, or offset method.

Also, as resin is a primary component of the printing liquid, it has the role of strongly attaching the inks and other additives to the surface of the wallpaper; moreover, it becomes dried after being wrapped around the foaming agent which expands due to heat and which forms the three dimensional effect printing layer. Therefore, this prevents the destruction of the foaming agent, which expands during the high-temperature and high-pressure molding process.

Also, various colors of inks and dyes are used, which makes it possible to print on the surface of the wallpaper in the color desired by the developer.

Here, the foaming agent expands from heat in the drying process, which makes it possible to print with a three-dimensional effect.

On the other hand, various other additives are used; those normally used include silicon stabilizers, lubricants, fire retardant agents or thickening agents.

The foaming agent used in this invention is the core material of this invention; the most suitable product for such use is either Expencel Microsphere of Sweden's Akzo, Inc., or Micropearl of Japan's Matsumoto, Inc.

Automobile wallpaper manufactured according to this invention uses a special foaming agent that is made of polymer with a strong exterior layer, and which expands 30 times in volume when heat is applied, thus creating a three-dimensional print pattern so that various results can be achieved.

First, when using a special foaming agent to achieve a three-dimensional effect when printing, the three-dimensional effect of the surface does not change at all during the high-temperature and high-pressure molding process. In existing foam printing, the foaming agent is normally mixed within the printing liquid, and nitrogen gas is given off by the foaming agent when heat is applied, so that the gas is trapped within the printing liquid to form the foam. Therefore, the foam in this kind of foaming agent is destroyed, and breaks during high-temperature and high-pressure molding; therefore, the three-dimensional effect is lost. However, the foaming agent used in this invention uses a gas which expands when heat is applied, and is surrounded in a polymer that has a high degree of strength and flexibility so that after the foam forms, there is no destruction of the foam even during the high-temperature and high-pressure molding process; therefore, the three-dimensional effect of the wallpaper surface can be maintained.

Second, the automobile wallpaper manufactured according to this invention has improved properties relative to wear resistance and sound absorption of the surface. The foaming agent used in this invention is a polymer with a high degree of strength and flexibility, so that it is very durable against external shocks such as friction. Also, the three-dimensional effect achieved on the surface of the wallpaper results in a two times or greater increase to the size of the surface area, which thereby improves the invention's sound absorption properties. It is common knowledge that, if the surface area of the material is large, the sound absorption properties become improved. Therefore, if the automobile wallpaper manufactured according to this invention is applied to automobiles, it will be possible with this invention to experience a quieter interior than in automobiles which use currently available types of wallpaper.

Third, automobile wallpapers currently being used have a high defect rate. In the case of cloth, there are many defects and impurities that occur in the weaving process, and these parts are usually discarded as defective. In the case of non-woven fabrics, consecutive sheets are manufactured by joining the fibers using needle punching or water-flow bonding, but partially striped patterns occur due to the needle marks and traces left from water-flow bonding, so that the product quality is reduced. However, if the foam printing process of this invention is carried out to the surface of the wallpaper, the printed patterns expand to a fixed volume, bringing about a three-dimensional form, and this has the effect of covering over the aforementioned defects and reducing the defect rate, rendering it possible to manufacture wallpaper more inexpensively.

Furthermore, the foaming agent used in this invention is able to achieve the same foaming effect as with existing foaming agents, but does so using less quantity. The reason for this is that bubbles within existing foaming agents are formed only by the gas caught in the printing liquid giving off nitrogen gas brought about by heat, so that the remainder of the foaming agent is absorbed by air, which makes it necessary to mix a large amount of foaming agent at the beginning. However, the entire amount of foaming agent of this invention contributes to the foam, so the same foaming results can be achieved by using only a small amount of agent.

Another advantage is that there are hydrocarbons contained within the thermoplastic resin of the foaming agent used in this invention; this hydrocarbon content contains fire retardant properties, so separate fire retardant processing is not necessary.

Furthermore, it is provided a manufacturing process for an automobile wallpaper in which a hydrocarbon and thermoplastic foaming promoter is inserted within the aforementioned thermoplastic polymer foaming agent.

As mentioned above, this invention achieves a three-dimensional effect, as well as a luxurious, special texture. Based on the three-dimensional effects of the surface, the surface area, as well as sound absorbent properties, increase. Three-dimensional printing is conducted to the surface of the wallpaper, and flaws in the wallpaper are covered over, so that this also facilitates a reduction in manufacturing costs.

### Brief description of diagrams

Diagram 1 is an outline diagram illustrating the foam printing manufacturing process of this invention.
Diagram 2 is a cross-section diagram illustrating the foaming agent of this invention.
Diagram 3 is a principle diagram illustrating the condition of the foam of the foaming agent of this invention.
Diagram 4 is an optical microscope photograph of the foaming agent of this invention, which is in a granular state before foaming.
Diagram 5 is an optical microscope photograph of the foaming agent of this invention, which has been heated, foamed and expanded.
Diagram 6 is an electron microscope photograph expanded 200 times, of wallpaper that has been printed normally.
Diagram 7 is an electron microscope photograph, expanded 200 times, of wallpaper that has been foam printed according to this invention.

**Explanation of codes of the main parts of the diagrams:**

| | |
|---|---|
| 1, 4: wallpaper | 2: print head |
| 3: dryer | 5, 7: exterior surface of foaming agent |
| 6, 8: foaming agent gas | |

## Claims

1. An automobile wallpaper manufacturing process
of expressing and forming various colors, as well as a three-dimensional effect, by means of printing and drying process conducted to the surface of automobile wallpaper, a printing process,
which produces printing on the surface of automobile wallpaper with a printing liquid,
to which a special foaming agent has been added,
which is composed of a thermoplastic polymer with an exterior layer;
in which the aforementioned foaming agent changes from a previous size of 5-50µm to possessing the exterior layer thickness of 2-15µm,
in which a hydrocarbon gas is inserted into the exterior layer,
so that its volume expands by 30 times due to the expansion of the hydrocarbon gas within the foaming agent when heat is applied,
in which the surface of the automobile wallpaper, printed according to the aforementioned printing process, is dried,
in which the three-dimensional effect is achieved during the drying process at the same time the printing liquid is caused to foam and in which
the printing layer of the automobile wallpaper, onto which is located the three-dimensional effect formed during the high-temperature / -pressure molding process, does not become crushed.

2. An automobile wallpaper manufacturing process according to claim 1, in which the volume expands during the process of foaming through heating which occurs during the drying process.

3. An automobile wallpaper manufacturing process according to claim 1, in which the aforementioned printing liquid is composed of resin, foaming agent, paint, dye, and other additives; the types of emulsion resins used for printing are one or more of the following kinds: acryl, styrene, polyvinylchloride, polyvinylalcohol, polyester, ethylenevinylchloride, ethylenevinyl acetate or polyurethane.

4. An automobile wallpaper manufacturing process according to claim 1, in which, when conducting the aforementioned printing process, 1-10 print heads are in use, and such printing and drying processes are carried out continuously.

5. An automobile wallpaper manufacturing process according to claim 4, in which the aforementioned printing process uses any one of or a combination of more than one of the following: rotating (rotary) screen method, flat screen method, or offset method, when printing.

6. An automobile wallpaper manufacturing process according to claim 1 , in which 0.2-30 percent by weight of a special foaming agent, composed of a strong thermoplastic polymer with a volume that increases by 30 times when heat is applied, is mixed into the printing liquid.

7. An automobile wallpaper manufacturing process according to claim 1, in which a hydrocarbon and thermoplastic foaming promoter is inserted within the aforementioned thermoplastic polymer foaming agent.

## Patentansprüche

1. Verfahren zur Fertigung einer Autotapete zum Ausdrücken und Bilden verschiedener Farben sowie einer dreidimensionalen Wirkung mit Hilfe eines Druck- und Trocknungsvorgangs, das an der Oberfläche der Autotapete durchgeführt wird, umfassend einen Druckvorgang,
der ein Druckbild auf der Oberfläche der Autotapete mit einer Druckflüssigkeit erzeugt,
welcher ein spezielles Blähmittel hinzugefügt wurde,
das aus einem thermoplastischen Polymer mit einer Außenschicht besteht,
wobei sich das Blähmittel von einer vorherigen Größe von 5 - 50 µm so verändert, dass es eine Außenschichtdicke von 2 - 15 µm besitzt,
wobei ein Kohlenwasserstoffgas in die Außenschicht eingebracht wird,
so dass sich deren Volumen wegen der Ausdehnung des Kohlenwasserstoffgases in dem Blähmittel um das 30-Fache ausdehnt, wenn Wärme zugeführt wird,
wobei die Oberfläche der Autotapete, die mit dem Druckverfahren bedruckt wurde, getrocknet wird,
wobei die dreidimensionale Wirkung während des Trocknungsvorgangs erzielt wird, und zwar zu derselben Zeit, zu der die Druckflüssigkeit zum Aufschäumen gebracht wird, und wobei
die Druckschicht der Autotapete, auf der sich die dreidimensionale Wirkung befindet, die während des Formungsvorgangs unter hoher Temperatur/hohem Druck gebildet wurde, nicht zerdrückt wird.

2. Verfahren zur Fertigung einer Autotapete nach Anspruch 1, wobei sich das Volumen während des Vorgangs des Aufschäumens durch Erwärmen, das während des Trocknungsvorgangs auftritt, ausdehnt.

3. Verfahren zur Fertigung einer Autotapete nach Anspruch 1, wobei die Druckflüssigkeit aus Harz, Blähmittel, Farbe, Farbstoff und anderen Zusatzstoffen besteht und wobei es sich bei den Arten der Emulsionsharze um eine oder mehrere der folgenden Arten handelt: Acryl, Styrol, Polyvinylchlorid, Polyvinylalkohol, Polyester, Ethylenvinylchlorid, Ethylenvinylacetat oder Polyurethan.

4. Verfahren zur Fertigung einer Autotapete nach Anspruch 1, wobei während der Durchführung des Druckvorgangs 1 bis 10 Druckköpfe verwendet werden und der Druck- und der Trocknungsvorgang kontinuierlich durchgeführt werden.

5. Verfahren zur Fertigung einer Autotapete nach Anspruch 4, wobei der Druckvorgang bei dem Drucken ein beliebiges oder eine Kombination der Folgenden verwendet: Rotationsdruckverfahren, Flachdruckverfahren oder Offsetdruckverfahren.

6. Verfahren zur Fertigung einer Autotapete nach Anspruch 1, wobei 0,2 - 30 Gew.-% eines speziellen Blähmittels, das aus einem thermoplastischen Polymer mit einem Volumen besteht, welches sich um das 30-Fache erhöht, wenn Wärme zugeführt wird, in die Druckflüssigkeit gemischt sind.

7. Verfahren zur Fertigung einer Autotapete nach Anspruch 1, wobei ein Kohlenwasserstoff und ein die thermoplastische Aufschäumung fördernder Stoff in das Blähmittel aus thermoplastischem Polymer eingebracht werden.

## Revendications

1. Procédé de fabrication de revêtement intérieur d'automobile
permettant d'exprimer et de former différentes couleurs, de même qu'un effet tridimensionnel, au moyen d'un procédé d'impression et de séchage réalisé sur la surface d'un revêtement intérieur d'automobile, procédé d'impression
qui produit une impression sur la surface du revêtement intérieur d'automobile avec un liquide d'impression, auquel un agent moussant spécial a été ajouté,
qui se compose d'un polymère thermoplastique ayant une couche extérieure,
dans lequel l'agent moussant mentionné précédemment change d'une taille antérieure de 5 à 50 µm jusqu'à posséder une couche extérieure d'une épaisseur de 2 à 15 µm,
dans lequel un gaz hydrocarboné est introduit dans la couche extérieure
de manière que son volume augmente de 30 fois grâce à la dilatation du gaz hydrocarboné dans l'agent moussant lorsque de la chaleur est appliquée,
dans lequel la surface du revêtement intérieur d'automobile, imprimée selon le procédé d'impression mentionné précédemment, est séchée,
dans lequel l'effet tridimensionnel est obtenu durant le procédé de séchage en même temps que le liquide d'impression est amené à mousser et dans lequel
la couche d'impression du revêtement intérieur d'automobile, sur laquelle apparaît l'effet tridimensionnel formé durant le procédé de moulage à hautes température et pression, ne s'écrase pas.

2. Procédé de fabrication de revêtement intérieur d'automobile selon la revendication 1 **caractérisé en ce que** le volume augmente durant le procédé de moussage par le chauffage qui a lieu durant le procédé de séchage.

3. Procédé de fabrication de revêtement intérieur d'automobile selon la revendication 1 **caractérisé en ce que** le liquide d'impression mentionné précédemment se compose de résine, d'agent moussant, de peinture, de colorant, et d'autres additifs; les types de résine en émulsion utilisés pour l'impression sont un ou plusieurs des types suivants: acrylique, styrène, chlorure de polyvinyle, alcool polyvinylique, polyester, chlorure de vinyle/éthylène, acétate de vinyle/éthylène ou polyuréthanne.

4. Procédé de fabrication d'un revêtement intérieur d'automobile selon la revendication 1 **caractérisé en ce que**, lorsque le procédé d'impression mentionné précédemment est réalisé, 1 à 10 têtes d'impression sont utilisées, et de tels procédés d'impression et de séchage sont mis en oeuvre en continu.

5. Procédé de fabrication de revêtement intérieur d'automobile selon la revendication 4 **caractérisé en ce que** le procédé d'impression mentionné précédemment utilise n'importe lequel des ou une combinaison de plus d'un des procédés suivants: procédé d'impression au cadre rotatif, procédé d'impression à l'épurateur plat, ou procédé offset, lors de l'impression.

6. Procédé de fabrication d'un revêtement intérieur d'automobile selon la revendication 1 **caractérisé en ce que** 0,2 à 30 pour cent en poids d'un agent moussant spécial, composé d'un polymère thermoplastique ayant un volume qui augmente 30 fois lorsque de la chaleur est appliquée, est (sont) mélangé(s) au liquide d'impression.

7. Procédé de fabrication d'un revêtement intérieur d'automobile selon la revendication 1 **caractérisé en ce qu'**un agent moussant hydrocarboné et thermoplastique est introduit dans l'agent moussant polymère thermoplastique mentionné précédemment.
